# FASCICULE DE BREVET EUROPEEN

(11) **EP 3 675 441 B1**
(45) Date de publication et mention de la délivrance du brevet: **16.08.2023**
(21) Numéro de dépôt: 19219727.5
(22) Date de dépôt: 26.12.2019
(51) Int. Cl.: H04L 49/101, H04L 49/00, H04L 49/351, H04L 49/60, H04L 67/12, H04L 49/35, H04L 12/40

(54) **COMMUTATEUR POUR UN SYSTÈME DE COMMUNICATION AVIONIQUE ET SYSTÈME DE COMMUNICATION AVIONIQUE COMPORTANT UN TEL COMMUTATEUR**
UMSCHALTER FÜR EIN AVIONIK-KOMMUNIKATIONSSYSTEM UND AVIONIK-KOMMUNIKATIONSSYSTEM, DAS EINEN SOLCHEN UMSCHALTER UMFASST
SWITCH FOR AN AVIONICS COMMUNICATION SYSTEM AND AVIONICS COMMUNICATION SYSTEM COMPRISING SUCH A SWITCH

(30) Priorité: 26.12.2018 FR 1874165
(43) Date de publication de la demande: 01.07.2020
(73) Titulaire: Thales, 92400 Courbevoie (FR)
(72) Inventeur: FITTERER, Eric, 33700 MERIGNAC (FR); MONNIER, Stéphane, 33700 MERIGNAC (FR); SITBON, Arnaud, 33700 MERIGNAC (FR); DUGAS, Alain, 33700 MERIGNAC (FR)
(74) Mandataire: Lavoix

(56) Documents cités:
- US-A1- 2009 303 883
- US-A1- 2018 115 484
- NIKKI CRANLEY: "The Implications for Network Switch Design in a Networked FTI Data Acquisition System", INTERNATIONAL TELEMETRY CONFERENCE, 31 octobre 2011 (2011-10-31), XP055629864,

## Description

La présente invention concerne un commutateur pour un système de communication avionique.

La présente invention concerne également un système de communication avionique comportant un tel commutateur.

L'invention permet notamment de mettre en oeuvre un système de communication avionique mixte implémentant à la fois deux réseaux avioniques ou plus qui doivent fonctionner de manière ségréguée.

En particulier, deux réseaux avioniques fonctionnant de manière ségréguée excluent toute interaction physique des trames transmises via ces réseaux.

De manière connue en soi, dans un aéronef, des réseaux avioniques, dits de monde fermé, sont ségrégués des réseaux avioniques, dits de monde ouvert.

Parmi les réseaux de monde fermé, on connait notamment des réseaux avioniques conformes à la norme ARINC 664.

On connait notamment du document US 2018/115484 un tel réseau.

De manière connue en soi, la norme ARINC 664 est basée sur le standard Ethernet et permet d'adapter l'utilisation de ce standard au contexte avionique et notamment, aux contraintes avioniques.

La norme ARINC 664 est composée de plusieurs parties, chaque partie étant utilisable en fonction de contraintes imposées aux données transitant via le réseau avionique mis en oeuvre selon cette norme.

Parmi ces parties, on connait notamment la partie référencée par « P7 » et dénotée généralement par « ARINC 664 P7 » ou « ARINC 664 Part 7 » ou encore « AFDX ^{®} ».

Cette partie P7 est utilisable pour transmettre des données avioniques entre différents systèmes avioniques mettant en oeuvre des fonctions essentielles de l'avion et présente ainsi le plus grand nombre de contraintes.

Ainsi, un réseau avionique mis en oeuvre selon la partie P7 présente un réseau ségrégué, redondant et déterministe. Le déterminisme de ce réseau signifie en particulier que chaque trame émise atteint sa destination en un temps maximal connu.

Dans certains réseaux avioniques, il est également possible d'utiliser le protocole Ethernet (au sens de la norme IEEE 802.3-2000 et versions ultérieures) combiné avec un certain nombre de restrictions additionnelles imposées par la nature du réseau correspondant.

En comparaison avec la partie P7 de la norme ARINC 664, le protocole Ethernet avec des restrictions présente moins de contraintes et est ainsi utilisable pour mettre en oeuvre des réseaux avioniques transmettant des données moins sensibles et/ou moins critiques.

Ces données présentent généralement des données de maintenance, de téléchargement et des fonctions de service pour l'équipage relatives à de différents systèmes avioniques. Ainsi, en cas de perte de ces données, elles peuvent être retransmises de nouveau sans créer de risque considérable pour la sécurité de l'avion.

Les restrictions additionnelles imposées sur le protocole Ethernet peuvent notamment concerner la manière de routage des trames. Ainsi, par exemple, ce routage peut être prédéterminé au sein de chaque commutateur du réseau, en fonction de l'identifiant de la trame.

Cela est par exemple le cas de la partie référencée par « P3 » de la norme ARINC 664 qui est basée également sur le protocole Ethernet mais qui présente moins de contraintes en comparaison avec la partie P7 et recommande cependant un usage de réseau configuré statiquement pour un mode opérationnel sur l'avion.

Les réseaux avioniques précités sont dits de monde fermé dans la mesure où à bord d'un aéronef, ils sont ségrégués physiquement de tout autre réseau avionique. Cela permet alors de garantir leur protection de toute influence extérieure.

Actuellement, de plus en plus de réseaux informatiques de monde ouvert, c'est-à-dire des réseaux informatiques accessibles de l'extérieur sont présents à bord d'un aéronef.

Cela est par exemple le cas d'un réseau de divertissement de passagers ou de tout autre réseau utilisable pour la transmission de données non-avioniques.

Ces réseaux sont généralement implémentés conformément au protocole Ethernet classique selon lequel les trames de données transitant par le réseau sont généralement routées par un mécanisme s'appuyant sur l'autoapprentissage, c'est-à-dire de manière la plus appropriée selon des routages précédemment effectués.

Ces réseaux sont donc ségrégués des réseaux avioniques conformes à la norme ARINC 664 pour prévenir toute interaction entre des trames de natures différentes.

Il est également possible d'avoir dans un aéronef des réseaux avioniques d'une même nature, c'est-à-dire des réseaux de monde ouvert ou de monde fermé, qui doivent être ségrégués l'un de l'autre.

Ainsi, par exemple, il est possible d'avoir deux réseaux de type ARINC 664 P7 ou deux réseaux de type Ethernet classique, qui doivent être ségrégués l'un de l'autre.

Dans tous les exemples précités, pour assurer la ségrégation nécessaire, il est habituel d'utiliser des moyens physiques différents pour mettre en oeuvre les réseaux correspondants.

Cela implique notamment l'utilisation des commutateurs et des moyens de transmission physiquement différents.

On conçoit alors que ce type de ségrégation implique au moins un doublement de chaque composante physique mettant en oeuvre ces réseaux. Cela implique alors de nombreux problèmes en termes d'encombrement et de poids dans une structure accueillant ces réseaux telle qu'un aéronef.

La présente invention a pour but de résoudre ces problèmes et de proposer donc un système de communication permettant d'assurer un partage d'au moins certaines composantes physiques pour des réseaux avionique devant être ségrégués.

À cet effet, l'invention a pour objet un commutateur selon la revendication 1.

Suivant d'autres aspects avantageux de l'invention, le commutateur comprend une ou plusieurs des caractéristiques des revendications 2 à 7.

L'invention a également pour objet un système de communication selon la revendication 8.

Ces caractéristiques et avantages de l'invention apparaitront à la lecture de la description qui va suivre, donnée uniquement à titre d'exemple non limitatif, et faite en référence aux dessins annexés, sur lesquels :
[Fig 1] la figure 1 est une vue schématique d'un aéronef comportant deux réseaux avioniques ségrégués ;
[Fig 2] la figure 2 est une vue schématique d'un système de communication selon l'invention, le système de communication mettant en oeuvre les réseaux de la figure 1 et comptant au moins un commutateur selon l'invention ; et
[Fig 3] la figure 3 est une vue schématique détaillée du commutateur de la figure 2.

Dans tout ce qui suit, toute mention d'une norme, notamment d'une norme informatique, fait référence à des principes généraux de cette norme qui sont bien connus de l'homme du métier et qui sont indépendants de différentes versions de cette norme, sauf mention explicite.

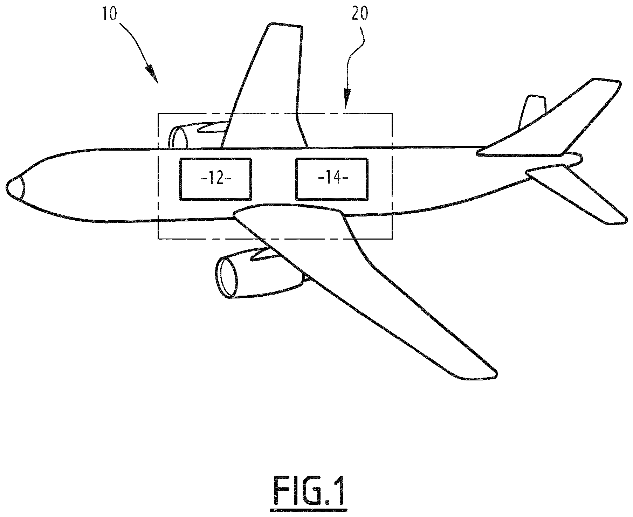

La figure 1 illustre un aéronef 10 tel qu'un avion.

L'aéronef 10 comprend un premier réseau avionique 12 et un deuxième réseau avionique 14 ségrégués l'un de l'autre.

En particulier, par ségrégation des réseaux avioniques, on entend l'ensemble des propriétés de ces réseaux permettant d'exclure toute interaction des données numériques transmises par ces différents réseaux.

Selon un exemple particulier de réalisation de l'invention décrit par la suite, le premier réseau avionique 12 permet de transmettre des données sensibles entre différents systèmes avioniques. Par donnée sensible, on comprend notamment toute donnée dont la perte ou un délai en transmission peut avoir une influence sur la sécurité de l'aéronef 10. Ces données sensibles doivent donc être ségréguées de tout autre type de données.

En particulier, le premier réseau avionique 12 permet de transmettre des trames de données conformément à un premier protocole de transmission. Ces trames sont donc conformes à ce premier protocole et seront désignées par la suite par le terme « trames de premier type ».

Ce premier protocole est par exemple de type Ethernet (au sens de la norme IEEE 802.3-2000 et versions ultérieures) à routage prédéterminé.

Dans tout ce qui suit, par routage prédéterminé, on entend un routage selon lequel chaque trame est cheminée dans le réseau selon des règles prédéterminées.

Ces règles prédéterminées sont notamment mémorisées dans une table de configuration de chaque commutateur mettant en oeuvre le premier réseau avionique 12 et définissent le cheminement de chaque trame au sein de ce commutateur.

Ainsi, par exemple, cela est le cas lorsque la table de configuration de chaque commutateur définit pour chaque trame un port d'entrée et un ou plusieurs ports de sortie, ou lorsque la table de configuration de chaque commutateur définit pour chaque trame un ou plusieurs ports de sortie.

Selon l'invention, le premier protocole est de type ARINC 664 P7 ou selon un mode de réalisation non revendiqué le premier protocole est de type ARINC 664 P3.

Dans l'exemple décrit, le deuxième réseau avionique 14 permet de transmettre des trames de données non-sensibles conformément à un deuxième protocole de transmission. Ces trames sont donc conformes à ce deuxième protocole et seront désignées par la suite par le terme « trames de deuxième type ».

Ce deuxième protocole est par exemple de type Ethernet (au sens de la norme IEEE 802.3-2000 et versions ultérieures).

En particulier, à la différence du premier protocole, le deuxième protocole n'impose pas de règles de routage prédéterminées. Un tel routage est par exemple basé sur l'autoapprentissage du réseau, c'est-à-dire de manière la plus appropriée selon des routages précédemment effectués.

Selon l'invention, les réseaux avioniques 12 et 14 sont mis en oeuvre par un même système physique de communication avionique 20 tout en permettant une ségrégation des trames de premier type et de deuxième type.

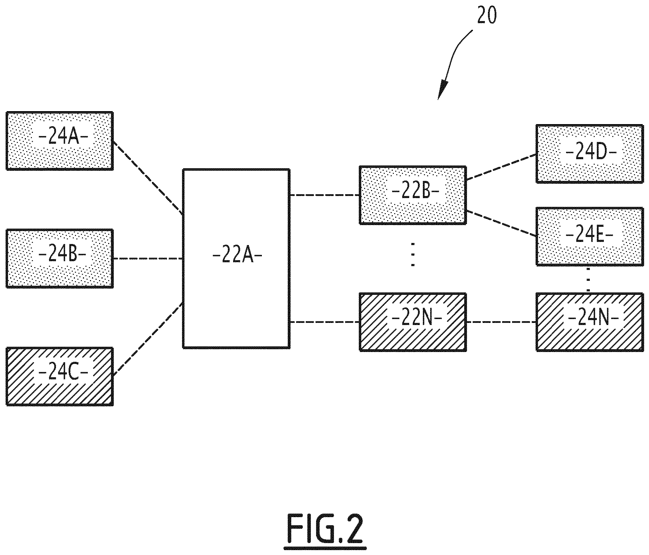

Un exemple d'un tel système de communication avionique 20 est illustré sur la figure 2.

Ainsi, en référence à cette figure, ce système de communication 20 comprend une pluralité de commutateurs 22A,...,22N et une pluralité d'équipements 24A,...,24N.

Chaque équipement 24A,...,24N, connu également sous le terme anglais de « End System », est intégré dans un système embarqué et assure la communication de ce système avec l'un des réseaux 12, 14.

Ainsi, en fonction du système embarqué dans lequel il est intégré, chaque équipement 24A,...,24N peut être émetteur et/ou récepteur des trames de premier type ou de trames de deuxième type.

En particulier, dans l'exemple de la figure 2, les équipements 24A, 24B, 24D et 24E permettent d'émettre et/ou de recevoir des trames de premier type destinées au premier réseau avionique 12 ou issues de ce réseau 12.

Dans le même exemple, les équipements 24C et 24N permettent d'émettre et/ou de recevoir des trames de deuxième type destinées au deuxième réseau avionique 14 ou issues de ce réseau 14.

Chaque équipement 24A,...,24N est raccordé à au moins l'un des commutateurs 22A,...22N via des moyens de transmission et via au moins un port de ce commutateur.

Les moyens de transmission présentent par exemple un câble à paire torsadée ou tout autre type de câble permettant une transmission bidirectionnelle de données.

Chaque commutateur 22A,...22N comprend une pluralité de ports d'entrée et de sortie et permet de cheminer chaque trame entrante via un port d'entrée vers un port de sortie.

Par ailleurs, lorsque les protocoles des deux réseaux avioniques 12, 14 sont de type Ethernet, chaque commutateur 22A,...22N est conforme à la norme IEEE 802.1D.

Dans l'exemple de la figure 2, le commutateur 22B est dédié au premier réseau avionique 12. Autrement dit, ce commutateur 22B permet de cheminer uniquement des trames de premier type selon une table de configuration prédéterminée dans celui-ci.

Par ailleurs, dans le même exemple, le commutateur 22N est dédié au deuxième réseau avionique 14. Autrement dit, ce commutateur 22N permet de cheminer uniquement des trames de deuxième type.

Les commutateurs 22B à 22N sont connus en soi et ne seront pas détaillés par la suite.

Selon l'invention, au moins l'un des commutateurs 22A,...,22N du système 20 est de type mixte dans la mesure où il permet de cheminer des trames de types différents tout en assurant la ségrégation de ces trames.

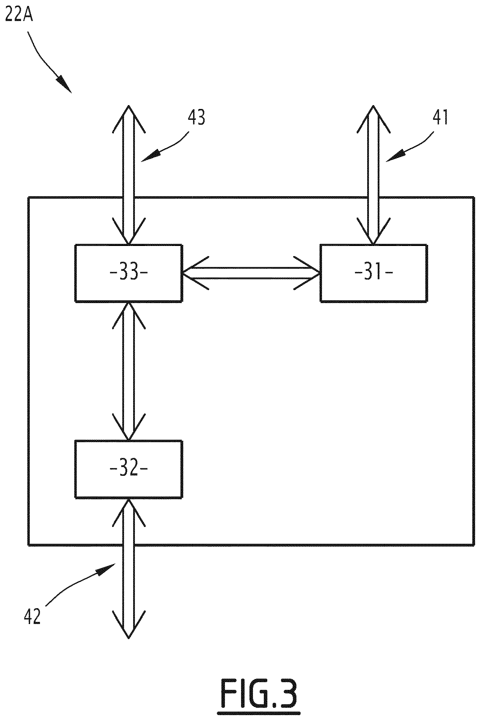

Dans l'exemple de la figure 2, le commutateur 22A est de type mixte. Sa structure sera détaillée par la suite en référence à la figure 3.

Ainsi, comme cela est visible sur la figure 3, le commutateur 22A comprend une première composante de cheminement 31, une deuxième composante de cheminement 32 et une interface d'allocation 33.

La première composante de cheminement 31 se présente par exemple sous la forme d'une matrice de cheminement et est apte à cheminer chaque trame de premier type entre au moins un port d'entrée et un port de sortie associés à cette composante.

De manière analogue, la deuxième composante de cheminement 32 se présente par exemple sous la forme d'une matrice de cheminement et apte à cheminer chaque trame de deuxième type entre au moins un port d'entrée et un port de sortie associés à cette composante.

Selon l'invention, l'interface d'allocation 33 permet d'associer chaque port d'entrée et chaque port de sortie du commutateur 22A à la première composante de cheminement 31 ou à la deuxième composante de cheminement 32, conformément à une configuration prédéterminée.

Par ailleurs, lorsque les protocoles des deux réseaux avioniques 12, 14 sont de type Ethernet, l'interface d'allocation 33 permet de faire l'association correspondante de chaque port d'entrée et de chaque port de sortie au niveau de la couche physique définie par ce commutateur 22A.

Dans tous les cas, l'association des ports s'effectue au plus bas niveau de gestion des trames défini par le commutateur 22A.

Selon l'invention, le commutateur 22A est configuré pour fonctionner selon un mode de fonctionnement opérationnel et selon un mode de fonctionnement de maintenance.

Dans le mode de fonctionnement opérationnel, la configuration prédéterminée de l'interface d'allocation 33 n'est pas modifiable.

Le mode de fonctionnement opérationnel est mis en oeuvre lors du fonctionnement normal du système de communication 20.

Dans le mode de fonctionnement de maintenance, la configuration prédéterminée de l'interface d'allocation 33 est modifiable. Le mode de fonctionnement de maintenance est exécuté par exemple au démarrage du système de communication 20 ou en amont, à la conception de celui-ci.

Ainsi, lors de ce mode de fonctionnement de maintenance, une configuration prédéterminée de l'interface d'allocation est par exemple définie par un système externe indépendant du système de communication 20, en fonction par exemple de l'emplacement du commutateur 22A au sein de l'aéronef.

Cette configuration prédéterminée est par exemple transmise au commutateur 22A via un port dédié à la configuration.

Pour associer un port à l'une des composantes de cheminement, la configuration prédéterminée présente par exemple un tableau comprenant pour l'identifiant de chaque port d'entrée et de sortie du commutateur 22A une indication relative à la première composante de cheminement 31 ou à la deuxième composante de cheminement 32. En fonction de cette indication, l'interface d'allocation est donc apte à associer chaque port du commutateur 22A à la première composante de cheminement 31 ou à la deuxième composante de cheminement 32.

Ainsi, dans le mode de fonctionnement opérationnel du commutateur 22A, à la réception d'une trame via un port d'entrée, l'interface d'allocation 33 transmet cette trame directement à la composante de cheminement à la quelle ce port d'entrée est associé.

À l'émission d'une trame par l'une des composantes de cheminement 31, 32, l'interface d'allocation 33 transmet cette trame directement à l'un des ports de sortie associé à cette composante.

Avantageusement, le commutateur 22A comprend en outre au moins un port d'entrée ou de sortie associé directement à l'une des composantes de cheminement 31, 32 de manière figée, sans intermédiaire de l'interface d'allocation 33.

Ainsi, dans l'exemple de la figure 3, la flèche 41 désigne l'ensemble des ports d'entrée et/ou de sortie associés de manière figée à la première composante de cheminement 31, la flèche 42 désigne l'ensemble des ports d'entrée et/ou de sortie associés de manière figée à la deuxième composante de cheminement 32, et la flèche 43 désigne l'ensemble des ports associables à l'une de ces composantes 31, 32 via l'interface d'allocation 33 conformément à la configuration prédéterminée de celle-ci.

De plus, en regarde de l'exemple de la figure 2, la flèche 41 désigne le port raccordant le commutateur 22A au commutateur 22BA, la flèche 42 désigne le port raccordant le commutateur 22A au commutateur 22N, et la flèche 43 désigne les ports raccordant le commutateur 22A aux équipements 24A, 24B et 24C.

Chacune de la première composante de cheminement 31, de la deuxième composante de cheminement 32 et de l'interface d'allocation 33 se présente par exemple sous la forme d'un circuit logique programmable de type FPGA (de l'anglais « Field-Programmable Gate Array ») ou ASIC (« Application Specific Integrated Circuit »).

Par ailleurs, les composantes de cheminement 31, 32 sont ségréguées physiquement l'une de l'autre en excluant ainsi toute interaction physique entre des trames de types différents.

De plus, avantageusement, la première composante de cheminement 31 et l'interface d'allocation 33 forment une composante physique unique. Encore avantageusement, la deuxième composante de cheminement 32 est une composante de type COTS (de l'anglais « Commercial off-the-shelf »), c'est-à-dire une composante de type « vendu sur l'étagère ». Dans ce cas, il est raccordé à l'interface d'allocation 33 par un bus approprié.

On conçoit alors que l'invention permet de mettre oeuvre deux réseaux avioniques ségrégués au sein d'un même système de communication.

L'invention permet en effet d'utiliser un même commutateur pour transmettre des données de natures différentes et cela tout en préservant la ségrégation de ces données. Cela est obtenu en utilisant une configuration prédéterminée d'association des ports à des différentes composantes de cheminement. Cette association est effectuée au plus bas niveau du commutateur, c'est-à-dire au niveau physique, ce qui permet de garantir la ségrégation des données au sein d'un même commutateur.

De plus, cette configuration ne peut être modifiée qu'en mode de fonctionnement spécifique, dit mode de fonctionnement de maintenance. Cela permet alors d'assurer la sécurité nécessaire lors du fonctionnement du système de communication 20.

Finalement, même si l'exemple ci-dessus est décrit en relation avec deux réseaux avioniques de natures différentes, l'invention reste applicable à deux réseaux avioniques quelconques devant être ségrégués. Ainsi, par exemple, il est possible d'appliquer l'invention à deux réseaux avioniques conformes à la norme ARINC 664 P7 ou à la norme Ethernet.

En outre, il est clair que l'invention peut être appliquée à un nombre N des réseaux avioniques supérieur à 2.

Le système de communication avionique selon un deuxième mode de réalisation de l'invention sera désormais expliqué.

Ce système de communication est sensiblement analogue à celui selon le premier mode de réalisation et comprend en particulier les mêmes composantes. Ces composantes seront donc dénotées par les mêmes références numériques que dans le cas précédent.

À la différence du premier mode de réalisation, le premier protocole utilisé dans le système de communication 20 selon le deuxième mode de réalisation présente un protocole mixte composé d'un troisième protocole et d'un quatrième protocole.

Le troisième protocole est de type ARINC 664 P7.

Le quatrième protocole est de type Ethernet à routage prédéterminé. Ce quatrième protocole est par exemple de type ARINC 664 P3.

Ainsi, pour mettre en oeuvre la transmission des trames selon un tel protocole mixte, la première composante de cheminement 31 du commutateur 22A et le commutateur 22B dédié au réseau avionique 12 sont modifiés par rapport au cas précédent.

En particulier, ces éléments sont modifiés pour différencier chaque trame entrante selon son protocole et pour traiter cette trame conformément à celui-ci.

De plus, chaque trame conforme au troisième protocole, c'est-à-dire au protocole de type ARINC 664 P7, est traitée en priorité par rapport à chaque trame conforme au quatrième protocole.

La différenciation des trames selon le troisième protocole et selon le quatrième protocole s'effectue selon un entête de ces trames.

Ainsi, par exemple, les premiers octets de l'entête de chaque trame conforme au quatrième protocole est défini par toute valeur différente de la valeur « 0000 0011 0000 0000 0000 0000 0000 0000 ». Il est en effet connu que cette valeur est réservée pour chaque trame conforme au protocole de type ARINC 664 P7 dans un champ de son entête appelé « MAC DEST ».

Il est clair que dans ce mode de réalisation, la deuxième composante de cheminement 32 ainsi que l'interface d'allocation 33 restent inchangés ce qui permet toujours de ségréguer le deuxième réseau avionique 14 du premier réseau avionique 12.

L'invention selon le deuxième mode de réalisation permet donc de mettre en oeuvre une mixabilité de différents réseaux avioniques tout en préservant leur ségrégation d'un autre réseau avionique. L'ensemble de ces réseaux avioniques peuvent donc être mis en oeuvre en utilisant les mêmes commutateurs ce qui permet de réduire davantage l'encombrement et le poids du système de communication avionique selon l'invention.

## Revendications

1. Commutateur (22A) pour un système de communication avionique (20) transmettant des données numériques se présentant sous la forme des trames de premier type conformes à un premier protocole et des trames de deuxième type conformes à un deuxième protocole différent du premier protocole, les trames de types différents étant transmises de manière ségréguée, comprenant :
- une pluralité de ports d'entrée, chaque port d'entrée étant apte à recevoir des trames de chaque type issues d'un équipement (24A,...,24N) ou d'un autre commutateur (22B,...,22N) ;
- une pluralité de ports de sortie, chaque port de sortie étant apte à transmettre des trames de chaque type vers un équipement (24A,...,24N) ou un autre commutateur (22B,...,22N) ;
- une première composante de cheminement (31) apte à cheminer chaque trame de premier type conformément au premier protocole entre au moins un port d'entrée et un port de sortie associés à cette composante ;
- une deuxième composante de cheminement (32) apte à cheminer chaque trame de deuxième type conformément au deuxième protocole entre au moins un port d'entrée et un port de sortie associés à cette composante ;
- une interface d'allocation (33) apte à associer chaque port d'entrée et chaque port de sortie à la première composante de cheminement (31) ou à la deuxième composante de cheminement (32), conformément à une configuration prédéterminée,
le commutateur (22A) étant **caractérisé en ce que**:
le commutateur étant configuré pour fonctionner selon un mode de fonctionnement opérationnel dans lequel la configuration prédéterminée est non-modifiable et selon un mode de fonctionnement de maintenance dans lequel la configuration prédéterminée est modifiable,
le premier protocole étant un protocole de type ARINC 664 P7.

2. Commutateur (22A) selon la revendication 1, dans lequel la configuration prédéterminée est déterminée en fonction de la position du commutateur (22A) .

3. Commutateur (22A) selon l'une quelconque des revendications précédentes, dans lequel chacune de la première composante de cheminement (31) et de la deuxième composante de cheminement (32) se présente sous la forme d'une matrice de cheminement.

4. Commutateur (22A) selon l'une quelconque des revendications précédentes, dans lequel chacun du premier protocole et du deuxième protocole est de type Ethernet.

5. Commutateur (22A) selon la revendication 4, définissant une même couche physique pour le premier protocole et le deuxième protocole, l'interface d'allocation (33) étant apte à associer chaque port d'entrée et chaque port de sortie à la première composante de cheminement (31) ou à la deuxième composante de cheminement (32) au niveau de ladite couche physique.

6. Commutateur (22A) selon la revendication 6, dans lequel le premier protocole est un protocole mixte composé d'un protocole de type ARINC 664 P7 et d'un protocole de type Ethernet à routage prédéterminé ;
et dans lequel la première composante de cheminement (31) est apte à différencier les trames de données conformes au protocole de type ARINC 664 P7 et les trames de données conformes au protocole de type Ethernet à routage prédéterminé, et à traiter chaque trame de données conformément au protocole lui correspondant, chaque trame de données conforme au protocole de type ARINC 664 P7 étant traitée en priorité par rapport à chaque trame de données conforme au protocole de type Ethernet à routage prédéterminé.

7. Commutateur (22A) selon l'une quelconque des revendications précédentes, comportant en outre au moins un port d'entrée ou de sortie associé directement à la première composante de cheminement (31) ou à la deuxième composante de cheminement (32) de manière figée, sans intermédiaire de l'interface d'allocation (33).

8. Système de communication avionique (20) comportant :
- une pluralité de commutateurs (22A,...,22N) raccordés entre eux pour former un réseau informatique ;
- une pluralité d'équipements (24A,...,24N), chaque équipement (24A,...,24N) étant émetteur et/ou récepteur des données numériques et étant raccordé à au moins un commutateur (22A,...,22N) ;
les données numériques se présentant sous la forme des trames de premier type conformes à un premier protocole et des trames de deuxième type conformes à un deuxième protocole, les trames de types différents étant transmises de manière ségréguée ;
le système (20) étant **caractérisé en ce qu'**au moins l'un des commutateurs (22A,...,22N) est conforme à l'une quelconque des revendications 1 à 7.

## Patentansprüche

1. Schalter (22A) für ein Avionik-Kommunikationssystem (20), das digitale Daten überträgt, die in Form von Frames eines ersten Typs gemäß einem ersten Protokoll und Frames eines zweiten Typs gemäß einem zweiten Protokoll, das sich vom ersten Protokoll unterscheidet, vorliegen, wobei die Frames unterschiedlichen Typs separat übertragen werden, umfassend:
- eine Vielzahl von Eingangsanschlüssen, wobei jeder Eingangsanschluss Frames von jedem Typ empfangen werden kann, die von einem Gerät (24A,...,24N) oder einem anderen Schalter (22B,...,22N) stammen;
- eine Vielzahl von Ausgangsanschlüssen, wobei jeder Ausgangsanschluss geeignet ist, um Frames von jedem Typ an ein Gerät (24A,...,24N) oder einen anderen Schalter (22B,...,22N) zu übertragen;
- eine erste Leitwegkomponente (31), die geeignet ist, um jedes Frame des ersten Typs gemäß dem ersten Protokoll zwischen mindestens einem Eingangsanschluss und einem Ausgangsanschluss, die mit dieser Komponente assoziiert sind, zu leiten;
- eine zweite Leitwegkomponente (32), die geeignet ist, um jedes Frame des zweiten Typs gemäß dem zweiten Protokoll zwischen mindestens einem Eingangsanschluss und einem Ausgangsanschluss, die mit dieser Komponente assoziiert sind, zu leiten;
- eine Zuordnungsschnittstelle (33), die geeignet ist, um jeden Eingangsanschluss und jeden Ausgangsanschluss gemäß einer vorbestimmten Konfiguration zu der ersten Leitwegkomponente (31) oder der zweiten Leitwegkomponente (32) zuzuordnen,
wobei der Schalter (22A) **dadurch gekennzeichnet ist, dass**:
der Schalter konfiguriert ist, um in einem Betriebsmodus, in dem die vorbestimmte Konfiguration nicht veränderbar ist, und in einem Wartungsmodus, in dem die vorbestimmte Konfiguration veränderbar ist, betrieben zu werden,
wobei das erste Protokoll ein Protokoll vom Typ ARINC 664 P7 ist.

2. Schalter (22A) nach Anspruch 1, wobei die vorbestimmte Konfiguration abhängig von der Position des Schalters (22A) bestimmt wird.

3. Schalter (22A) nach einem der vorherigen Ansprüche, wobei jede von der ersten Leitwegkomponente (31) und der zweiten Leitwegkomponente (32) in der Form einer Leitwegmatrix vorliegt.

4. Schalter (22A) nach einem der vorherigen Ansprüche, wobei jedes von dem ersten Protokoll und dem zweiten Protokoll vom Typ Ethernet ist.

5. Schalter (22A) nach Anspruch 4, der eine gleiche physische Schicht für das erste Protokoll und das zweite Protokoll definiert, wobei die Zuordnungsschnittstelle (33) geeignet ist, um jeden Eingangsanschluss und jeden Ausgangsanschluss der ersten Leitwegkomponente (31) oder der zweiten Leitwegkomponente (32) auf der Ebene der physischen Schicht zu assoziieren.

6. Schalter (22A) nach Anspruch 6, wobei das erste Protokoll ein gemischtes Protokoll ist, das aus einem Protokoll vom Typ ARINC 664 P7 und einem Protokoll vom Typ Ethernet mit vorbestimmtem Routing besteht;
und wobei die erste Leitwegkomponente (31) in der Lage ist, zwischen Datenframes, die dem Protokoll vom Typ ARINC 664 P7 entsprechen, und Datenframes, die dem Protokoll vom Typ Ethernet mit vorbestimmtem Routing entsprechen, zu unterscheiden und jedes Datenframe gemäß dem jeweiligen Protokoll zu verarbeiten, wobei jedes Datenframe gemäß dem Protokoll vom Typ ARINC 664 P7 vorrangig vor jedem Datenframe gemäß dem Protokoll vom Typ Ethernet mit vorbestimmtem Routing verarbeitet wird.

7. Schalter (22A) nach einem der vorherigen Ansprüche, ferner umfassend mindestens einen Eingangs- oder Ausgangsanschluss, der auf feste Weise direkt mit der ersten Leitwegkomponente (31) oder der zweiten Leitwegkomponente (32) assoziiert ist, ohne Zwischenschaltung der Zuordnungsschnittstelle (33).

8. Avionik-Kommunikationssystem (20), umfassend:
- eine Vielzahl von Schaltern (22A,...,22N), die untereinander verbunden sind, um ein Computernetzwerk zu bilden;
- eine Vielzahl von Geräten (24A,...,24N), wobei jedes Gerät (24A,...,24N) ein Sender und/oder Empfänger von digitalen Daten ist und mit mindestens einem Schalter (22A,...,22N) verbunden ist;
wobei die digitalen Daten in Form von Frames eines ersten Typs gemäß einem ersten Protokoll und Frames eines zweiten Typs gemäß einem zweiten Protokoll vorliegen, wobei die Rahmen verschiedener Typen separat übertragen werden;
wobei das System (20) **dadurch gekennzeichnet, dass** mindestens einer der Schalter (22A,...,22N) gemäß einem der Ansprüche 1 bis 7 ist.

## Claims

1. A switch (22A) for an avionics communication system (20) that transmits digital data in the form of frames of a first type that are in compliance with a first protocol and frames of a second type that are in compliance with a second protocol which is different from the first protocol, with the frames of different types being transmitted in a segregated manner, the switch comprising:
- a plurality of input ports, each input port being capable of receiving frames of each type originating from an equipment unit (24A,..., 24N) or from another switch (22B,..., 22N);
- a plurality of output ports, each output port being capable of transmitting the frames of each type to an equipment unit (24A,..., 24N) or another switch (22B,..., 22N);
- a first routing component (31) capable of routing each frame of the first type in compliance with the first protocol between at least one input port and one output port associated with this component;
- a second routing component (32) capable of routing each frame of the second type in compliance with the second protocol between at least one input port and one output port associated with this component;
- an allocation interface (33) capable of associating each input port and each output port with the first routing component (31) or with the second routing component (32), in accordance with a predetermined configuration.
the switch (22A) being **characterized in that**:
the switch being configured so as to operate according to an operational mode of operation in which the predetermined configuration cannot be modified and according to a maintenance mode of operation in which the predetermined configuration can be modified,
the first protocol being a protocol of type ARINC 664 P7.

2. A switch (22A) according to claim 1, in which the predetermined configuration is determined according to the position of the switch (22A).

3. A switch (22A) according to any preceding claim, in which each of the first routing component (31) and the second routing component (32) is in the form of a routing matrix.

4. A switch (22A) according to any one of the preceding claims, in which each of the first protocol and of the second protocol is of the Ethernet type.

5. A switch (22A) according to claim 4, defining a same physical layer for the first protocol and the second protocol, the allocation interface (33) being capable of associating each input port and each output port with the first routing component (31) or with the second routing component (32) at the said physical layer.

6. A switch (22A) according to claim 6, in which the first protocol is a mixed protocol composed of a protocol of type ARINC 664 P7 and a protocol of type Ethernet with predetermined routing;
and in which the first routing component (31) is capable of differentiating the data frames conforming to the ARINC 664 P7 type protocol and the data frames conforming to the Ethernet type protocol with predetermined routing, and of processing each data frame in compliance with the corresponding protocol, each data frame conforming to the ARINC 664 P7 type protocol being processed on a prioritised basis in relation to each data frame conforming to the Ethernet type protocol with predetermined routing.

7. A switch (22A) according to any one of the preceding claims, in addition comprising at least one input or output port associated directly with the first routing component (31) or with the second routing component (32) in a fixed manner, without needing the intervention of the allocation interface (33).

8. An avionics communication system (20) comprising:
- a plurality of switches (22A,..., 22N) connected to each other in order to form a data network;
- a plurality of equipment units (24A,..., 24N), each equipment unit (24A,..., 24N) being a transmitter and or receiver of digital data and being connected to at least one switch (22A,..., 22N);
the digital data being present in the form of frames of the first type that are in compliance with a first protocol and frames of the second type that are in compliance with a second protocol, the frames of different types being transmitted in a segregated manner;
the system (20) being **characterized in that** at least one of the switches (22A,..., 22N) conforms to any one of claims 1 to 7.
